# EUROPÄISCHE PATENTSCHRIFT

(11) **EP 1 702 134 B1**
(45) Veröffentlichungstag und Bekanntmachung des Hinweises auf die Patenterteilung: **05.03.2008**
(21) Anmeldenummer: 04802653.8
(22) Anmeldetag: 28.10.2004
(51) Int. Cl.: E21B 10/44, E21B 10/58, B23B 51/02

(54) **BOHRWERKZEUG**
DRILLING TOOL
OUTIL DE PER AGE

(30) Priorität: 23.12.2003 DE 10361501
(43) Veröffentlichungstag der Anmeldung: 20.09.2006
(73) Patentinhaber: Robert Bosch GmbH, 70442 Stuttgart (DE)
(72) Erfinder: HAUSSMANN, August, 88213 Ravensburg (DE); WIDMANN, Rainer, 88213 Ravensburg (DE)
(74) Vertreter: Eisele, Otten, Roth & Dobler
(86) Internationale Anmeldenummer: PCT/DE2004/002400
(87) Internationale Veröffentlichungsnummer: WO 2005/061838

(56) Entgegenhaltungen:
- EP-A- 1 024 247
- EP-A- 1 302 290
- US-A- 4 889 200
- US-A- 5 265 688

## Beschreibung

Die Erfindung betrifft ein Bohrwerkzeug gemäß dem Oberbegriff des Anspruchs1.

Aus der DE OS 2 008 825 ist ein Bohrer mit einer Hartmetälleinlage bekannt, welche einen zapfenförmigen Ansatz aufweist und mit diesem in einer Bohrung in den Bohrerschaft eingesteckt und verlötet ist. Die den Bohrkopf bildende Hartmetalleinlage liegt auf stirnseitig am Bohrerschaft angeordneten Flächen auf. Nachteilig an einer derartigen Ausbildung des Bohrerkopfes bzw. der Verbindung des Bohrerkopfes mit dem Bohrerschaft ist, dass der aus teurem Hartmetall bestehende Ansatz des Bohrerkopfes ungenutzt für die Bearbeitung des zu bearbeitenden Materials innerhalb des Bohrerschafts liegt.

Weiterhin sind aus der DE 43 39 245 A1 Spiralbohrer bekannt, welche Bohrerköpfe aufweisen, welche die Bohrerwendel uförmig übergreifen. Durch die Ausbildung von zwei Füssen am Bohrerkopf weisen derartige Bohrerköpfe ein großes Volumen auf. Weiterhin lässt sich ein Bohrerkopf mit Rücksprüngen in einem Press-Sinter-Verfahren nur mit erhöhtem Aufwand herstellen.

Aus der EP1 024 247 A1 ist ein Bohrwerkzeug mit einem Schaft und einem Bohrkopf bekannt, wobei der Schaft mit einem Schlitz versehen ist, in welchem eine Bohrplatte angeordnet ist, wobei die Bohrplatte in einer Draufsicht parallel zur Mittellängsachse des Bohrwerkzeugs betrachtet eine rechteckige Grundform hat und wobei an zwei einander diametral gegenüberliegenden Ecken jeweils eine dreiecksförmige Verbreiterung der Bohrplatte vorgesehen ist.

Aus der US 4,889,320 ist ein Gesteinsbohrer mit eingängigem oder zweigängigem Spiralschaft und mit wenigstens einer, sich über den gesamten Durchmesser des Bohrerkopfes erstreckenden,` dachförmig geneigten, Schneiden aufweisenden Schneidplatte aus Hartmetall bekannt, wobei der Bohrerkopf im Querschnitt quadratisch, nahezu quadratisch oder rechteckformig ausgebildet ist, wobei die Schneidplatte oder die Kreüzschneidplatten zu den Eckbereichen oder zu den Seitenflächen des Bohrerkopfes hin ausgerichtet sind und über die Umfangskontur des Bohrerkopfes hinausragen.

Aus der EP 1 302 290 A1 ist ein Bohrwerkzeug mit einem Ein- oder Mehrschneiden-Werkzeugkopf mit wenigstens einem Schneidkörper bekannt, welcher in einem Schlitz aufgenommen ist, wobei der Schneidkörper einen dachförmig ausgebildeten zentrischen Bereich umfasst, der seitlich von zwei in Wirkrichtung des Bohrers zurückversetzten Außenbereichen begrenzt ist und wobei die Anschliffflächen des zentrischen Bereichs eine pyramidenförmige Spitze unter Vermeidung der Bildung einer Querschneide ausbilden.

Aus der US 5,265,688 ist schließlich ein Gesteinsbohrer mit Schaft und einem Bohrkopf bekannt, der auf seiner in Vorschubrichtung weisenden Stirnseite eine zumindest über den Durchmesser sich erstreckende Schneidplatte und mindestens zwei Schneidstifte aufweist, wobei die Schneidplatte in einem Schlitz aufgenommen ist.

Aufgabe der Erfindung ist es, ein Bohrwerkzeug vorzuschlagen, bei welchem ein Schneidelement bzw. ein Bohrerkopf optimal für die Bearbeitung des zu bohrenden Materials eingesetzt werden und bei welchem Materialanhäufungen in Bereichen ohne Bearbeitungsfunktion weitestgehend vermieden sind.

Diese Aufgabe wird ausgehend von den Merkmalen des Oberbegriffs des Anspruchs 1 erfindungsgemäß durch die kennzeichnenden Merkmale des Anspruchs 1 gelöst. In den Unteransprüchen sind vorteilhafte und zweckmäßige Weiterbildungen angegeben.

Der Erfindung liegt der Kerngedanke zu Grunde, ein Bohrwerkzeug mit einem Schneidelement zu schaffen, bei welchem mit einem minimalen Aufwand an dem Werkstoff, welcher für das Schneidelement Verwendung findet, wie z.B. Hartmetall oder PKD, eine maximale Bohr- bzw. Schlagbohrwirkung erzielbar ist, wobei das Schneidelement zur Erhaltung der Eigenstabilität dennoch eine massive, kompakte und gedrungene Gestalt aufweist.

Die Erfindung sieht vor, die Bohrerwendel stirnseitig mit einem Schlitz zu versehen, welcher die Bohrerwendel seitlich und zur Stirnseite öffnet, wobei der Fußbereich des Schneidelements, welches quer zum Verlauf einer Längsmittelebene durchgehend T-förmige Querschnitte aufweist, vom Schlitz aufgenommen wird und seitlich über diesen hinausragt. Hierbei erstrecken sich die Führungsfasen des Schneidelements jeweils etwa parallel zu einer Bohrerlängsachse durchgehend am Umfang des Schneidelements über den Kopfbereich und den Fußbereich des Schneidelements. Hierdurch erhält der Fußbereich des Schneidelements eine Doppelfunktion. Der Fußbereich dient der Verbindung zwischen Schneidelement und Bohrerwendel und ermöglicht neben einer optimalen Schlagkraftübertragung über die quer zur Bohrerlängsachse orientierten Flächen eine Übertragung hoher Drehmomente über die formschlüssige Verbindung. Weiterhin übernimmt der Fußbereich dadurch, dass dieser einen Durchmesser im Bereich des Nenndurchmessers aufweist, Aufgaben, welche bisher nur vom Kopfbereich des Schneidelements übernommen werden. Denn der Fußbereich weist Führungsfasen auf, welche als Verlängerungen der Führungsfasen des Kopfbereichs ausgebildet sind. Durch diese Funktionsübertragung auf den Fußbereich des Schneidelements ist es möglich das Schneidelement in unteren seitlichen Bereichen etwa um die Höhe des Fußbereichs niedriger auszubilden und dennoch eine vorgeschriebene Mindesthöhe der Schneidplatte zu erhalten.

Weiterhin sieht die Erfindung vor, an der Führungsfase eine Führungskante auszubilden, welche sich insbesondere durchgehend über den Kopfbereich und den Fußbereich erstreckt. Durch diese lange Führungskante ist es möglich, bei geringer Reibung eine besonderes gute Führung an der Bohrlochwand zu gewährleisten.

Erfindungsgemäß ist es vorgesehen, das Schneidelement mit Seitenflächen zu versehen, welche sich in Wirkrichtung des Bohrwerkzeugs V-förmig öffnen und zur Bohrerlängsachse einen Winkel von 2° bis 45° und insbesondere 15° aufweisen. Dies erlaubt ein einfaches Entformen des Schneidelements, wenn dieses beispielsweise in einem Press-Sinter-Verfahren hergestellt wird. Weiterhin werden durch eine solche Formgebung die an der Bohrerwendel und am Schneidelement auftretenden Kerbwirkungen minimiert.

Die Erfindung sieht auch vor, den Fußbereich des Schneidelements in einem Winkel λ schräg zu dem stirnseitigen Ende der Bohrerwendel bzw. zu dem Schlitz im stirnseitigen Ende der Bohrerwendel anzuordnen, wobei für den Winkel λ gilt 3° ≤ λ ≤ 15° und insbesondere λ ≈ 6°. Hierdurch ist es möglich, den Bohrerkopf in seinem Fußbereich besonders gut abzustützen, da die Bohrerwendel mit einer massiv ausgebildeten Schulter in Drehrichtung auf den Bohrerkopf wirkt. Beispielsweise sind für die folgenden Bohrerdurchmesser die folgenden Winkel λ vorgesehen.

| | | | |
|---|---|---|---|
| Bohrerdurchmesser in mm | 6 | 10 | 16 |
| Winkel λ | 7, 6° | 5,8° | 4,7° |

Weiterhin sieht die Erfindung vor, die Seitenflächen des Schneidelements symmetrisch zu der durch das Schneidelement bzw. den Schlitz definierten Längsmittelebene auszurichten. Hierdurch ist das Einsetzen des Schneidelements in die Bohrerwendel erleichtert, da beim Einsetzen nicht auf die Orientierung des Scheidelements geachtet werden muss, da das Schneidelement auch um 180° um die Bohrerlängsachse gedreht einsetzbar ist.

Schließlich sieht die Erfindung vor, die Seitenwände konkav oder konvex oder s-förmig auszubilden. Dies erlaubt eine materialsparende bzw. eine besonders massive bzw. eine Kanten vermeidende Konstruktion des Schneidelements.

Die Erfindung sieht auch noch vor, an wenigstens eine der Längsseiten des Bohrerkopfs wenigstens eine Aussparung auszubilden, welche etwa parallel zur Bohrerlängsachse verläuft. Hierdurch ist es möglich, die Abfuhr von Bohrmehl bzw. Bohrklein effektiver zu gestalten.

Weitere Einzelheiten der Erfindung werden in der Zeichnung anhand von schematisch dargestellten Ausführungsbeispielen beschrieben.

Hierbei zeigt:
- Figur 1a:: eine Stirnansicht eines als Vollhartmetallkopf ausgebildeten Schneidelements und eines schematisch angedeuteten Abschnitts einer Bohrerwendel,
- Figur 1b:: eine Seitenansicht des in der Figur 1a dargestellten Schneidelements,
- Figur 1c:: einen Schnitt durch das in der Figur 1b dargestellte Schneidelement entlang der Schnittlinie Ic-Ic,
- Figur 1d:: eine Unteransicht des in der Figur 1b dargestellten Schneidelements aus einer Pfeilrichtung Id,
- Figur 1e:: eine Draufsicht auf die in der Figur 1a dargestellte Bohrerwendel aus einer Pfeilrichtung Ie,
- Figur 2:: eine Unteransicht eines weiteren Schneidelements und
- Figur 3a-3e:: fünf Ausführungsvarianten eines Schneidelements.

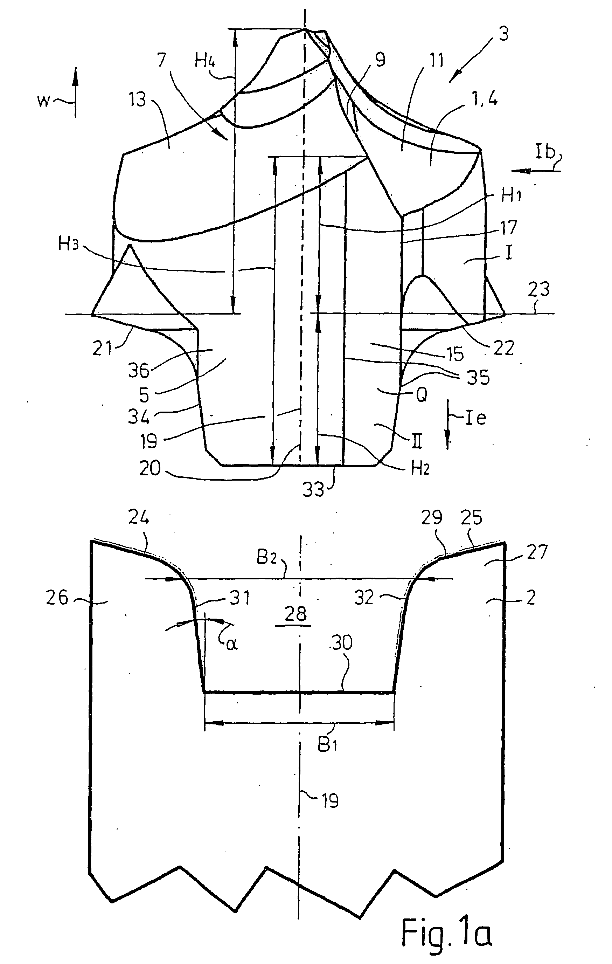

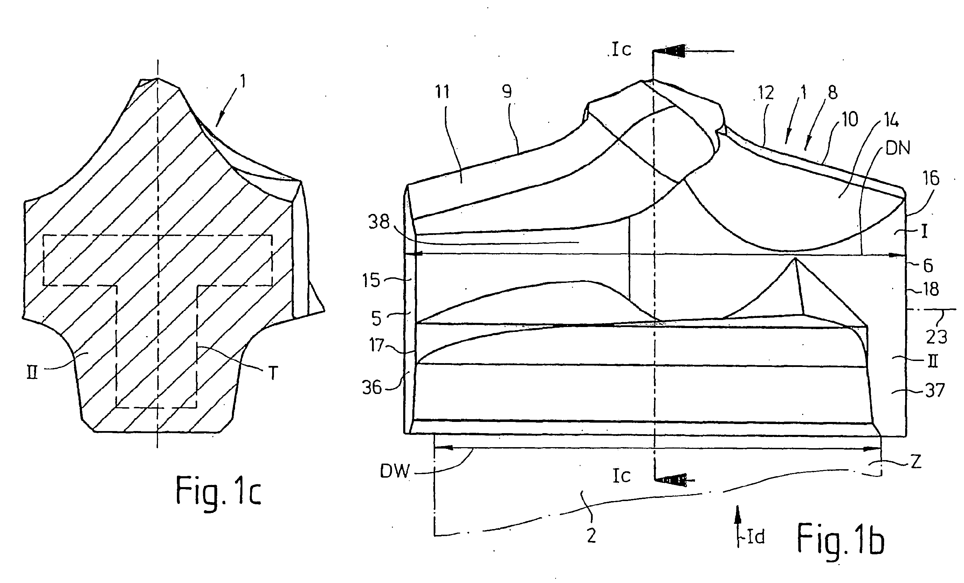

In der Figur 1a sind ein als Vollhartmetallkopf ausgebildetes Schneidelement 1 und ein schematisch angedeuteter Abschnitt einer Bohrerwendel 2 eines nicht weiter dargestellten Bohrwerkzeugs 3 in einer sogenannten Explosionsansicht dargestellt. Das Schneidelement 1 bildet einen Bohrerkopf 4. In der Stirnansicht auf eine Querseite 5 des Schneidelements 1 sind von einer ersten Schneide 7 eine Hauptschneide 9, welche durch eine Spanfläche 11 und eine Freifläche 13 gebildet wird, und eine Führungsfase 15 mit einer Führungskante 17 zu sehen, welche parallel zu einer Bohrerlängsachse 19 verlaufen, die in einer Längsmittelebene 20 liegt. Das Schneidelement 1 bzw. der Bohrerkopf 4 besteht aus einem Kopfbereich I und einem Fußbereich II. Diese beiden Bereiche I und II gehen im Bereich einer Querebene 23, welche von der Bohrerlängsachse 19 im rechten Winkel geschnitten wird, ineinander über. Mit Unterseiten 21, 22 liegt das Schneidelement 1 auf Schultern 24, 25 von Stegen 26, 27 auf, welche einen Schlitz bzw. eine Nut 28 an einem stirnseitigen Ende 29 der Bohrerwendel 2 bilden. Die Nut 28 ist durch einen Boden 30 und Seitenwände 31, 32 begrenzt. Bei eingesetztem Schneidelement 1 liegt dieses mit einem Boden 33 unter Ausbildung eines Lötspalts auf dem Boden 30 der Nut 28 auf. Weiterhin liegen Seitenflächen 34, 35 des Fußbereichs II des Schneidelements 1 an den Seitenwänden 31, 32 der Nut 28 an. Somit ist das in der Ansicht auf die Stirnseite 5 T-förmige Schneidelement 1 in die Nut 28 eingebettet und ragt lediglich mit seinem Kopfbereich I und stirnseitigen Enden 36, 37 (siehe auch Figur 1b) über die Nut 28 bzw. die Bohrerwendel 2 seitlich hinaus. Die Bohrerwendel 2 geht in einen nicht dargestellten Einspannschaft über, welcher als Systemeinsteckende und insbesondere als SDS-Plus-Einspannschaft ausgebildet ist. Auf die Darstellung von an der Bohrerwendel 2 vorhandenen Bohrmehlnuten wurde zur Vereinfachung der Figur 1a verzichtet. Die Führungsfase 15 weist im Kopfbereich I des Schneidelements 1 eine maximale Höhe H₁ auf. Die in den Fußbereich II fortgeführte Führungsfase 15 weist dort eine Höhe H₂ auf. Somit besitzt die Führungsfase 15 eine Gesamthöhe H₃, welche sich aus der Summe der Höhen H₁ und H₂ ergibt. Das heißt, die üblicherweise allein durch den Kopfbereich I des Schneidelements 1 gebildete Führungsfase 15 ist um den Wert H₂ erhöht, so dass das Bohrwerkzeug 3 besser geführt ist bzw. bei niedrigerer Kopfhöhe H₄ ein besseres Führungsverhalten aufweist. Der Fußbereich II besteht im wesentlichen aus einem Quader Q, welcher seitlich aus der am stirnseitigen Ende 29 der Bohrerwendel 2 angeordneten Nut 28 heraussteht. Die Nut 28 weist im Bereich ihres Bodens 30 eine Breite B₁ auf, welche sich in eine Wirkrichtung w des Bohrwerkzeugs 3 vergrößert und beispielsweise am Übergang der Seitenwände 31, 32 in die Schultern 24, 25 auf eine Breite B₂ angewachsen ist.

In der Figur 1b ist eine Seitenansicht auf eine Längsseite 38 des Schneidelements 1 dargestellt. Die Orientierung dieser Ansicht ist in der Figur 1a durch einen Pfeil Ib angedeutet. In der Figur 1b ist mit gestrichelten Linien die Bohrerwendel 2 angedeutet, welche das Schneidelement 1 aufnimmt. Das Schneidelement 1 weist im Kopfbereich I und im Fußbereich II einen Nenndurchmesser DN auf, welcher größer ist als ein Wendeldurchmesser DW. Somit ragt das Schneidelement 1 mit den stirnseitigen Enden 36, 37 über einen durch den Wendeldurchmesser DW definierten Zylinder Z hinaus und wirkt auch mit dem Fußbereich II auf das zu bearbeitende Material ein. Weiterhin sind in der Figur 1b eine zweite Querseite 6, eine zweite Schneide 8, eine Hauptschneide 10, eine Spanfläche 12, eine Freifläche 14, eine Führungsfase 16 und eine Führungskante 18 des Schneidelements 1 sichtbar.

Die Figur 1c zeigt einen Schnitt durch das in der Figur 1b dargestellte Schneidelement 1 entlang der Schnittlinie Ic-Ic. In der Schnittdarstellung weist das Scheidelement 1 wiederum die bereits aus der Ansicht auf die Querseite bekannte T-ähnliche Gestalt T auf, welche das Schneidelement 1 besonders im Fußbereich I massiv und stabil macht.

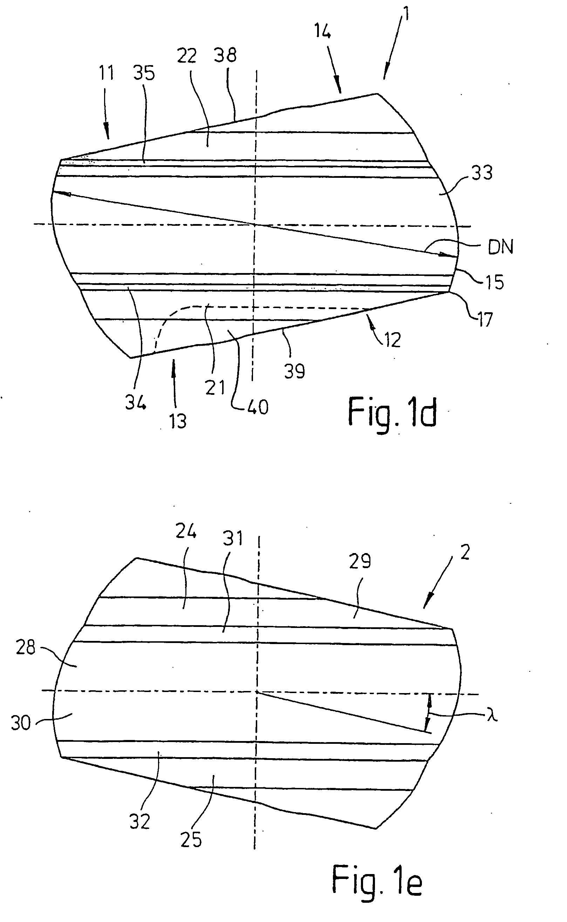

In der Figur 1d ist eine Unteransicht des in der Figur 1b dargestellten Schneidelements 1 aus einer Pfeilrichtung Id dargestellt. Der Boden 33 des Schneidelements 1 geht über die Seitenflächen 34, 35 in die Unterseiten 21, 22 und in die Längsseiten 38, 39 über. Unterhalb von Spanflächen 11 bzw. 12 ist das Schneidelement 1 schlank ausgebildet. Unterhalb von Freiflächen 13 bzw. 14 ist das Schneidelement 1 verbreitert und massiv ausgebildet. Mit einer gestrichelten Linie ist ein alternativer Verlauf der Längsseite 39 angedeutet, mit welchem eine Aussparung 40 geschaffen wird, welche die Spanabfuhr am Schneidelement 1 erleichtert. Eine derartige Aussparung kann selbstverständlich auch an der Längsseite 39 realisiert werden. Weiterhin sind die in die Zeichnungsebene hineinverlaufende Führungskante 17 und die sich an diese anschließende Führungsphase 15 gekennzeichnet.

In der Figur 1e ist eine Draufsicht auf die Stirnseite 29 der Bohrerwendel 2 abgebildet. Die Schultern 24, 25 gehen über die Seitenwände 31, 32 in den Boden 30 über. Die tiefer in der Zeichnungsebene liegende Bohrmehlnut der Bohrerwendel ist nicht dargestellt. Durch den Verlauf der Nut 28 ist erkennbar wie ein in die Nut 28 eingesetztes Schneidelement 1 mit seinen Längsseiten 38 bzw. 39 (siehe Figur 1d) in einem Winkel λ schräg zu den Seitenwänden 31, 32 der Nut 28 steht.

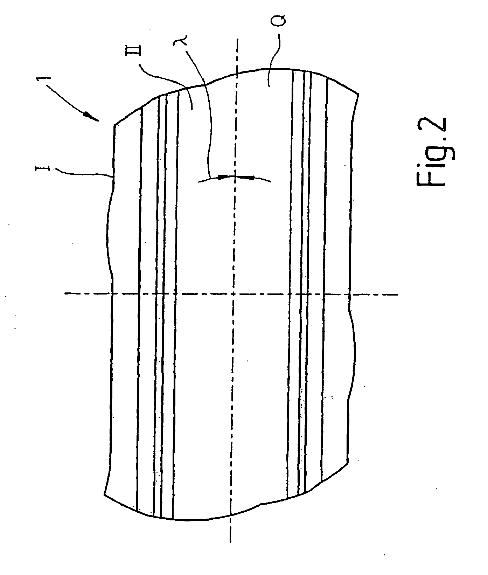

Die Figur 2 zeigt eine Unteransicht eines weiteren Schneidelements 1. Bei diesem ist ein im wesentlichen einen Fußbereich II bildender Quader Q parallel zu einem Kopfbereich I und somit auch zu einem nicht dargestellten stirnseitigen Ende einer Bohrwendel ausgerichtet. Ein Winkel λ, welcher die Abweichung definiert, beträgt somit 0°.

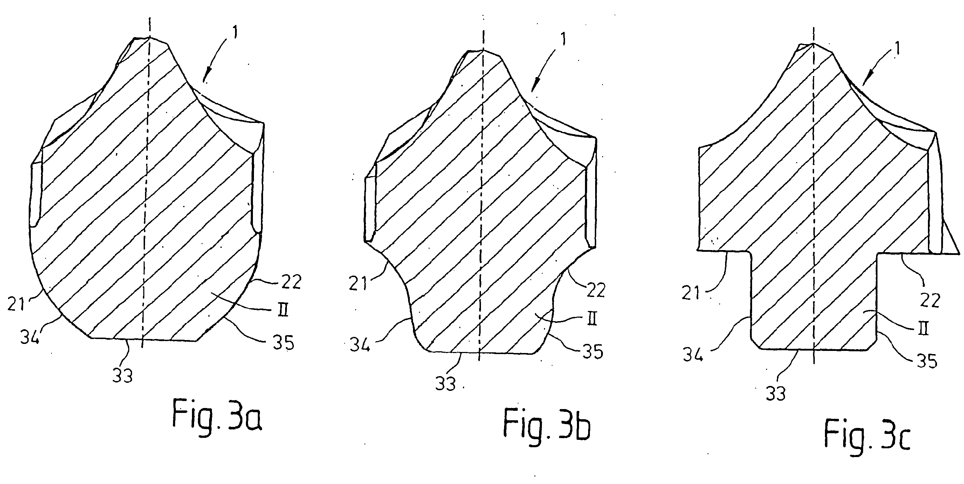

Die Figuren 3a bis 3e zeigen in Analogie zu der Figur 1c Querschnitte durch fünf Schneidelemente, welche unterschiedliche Fußbereiche aufweisen.

Die Figur 3a zeigt ein Schneidelement 1 bei welchem ein Fußbereich II Seitenflächen 34, 35 bzw. Unterseiten 21, 22 aufweist, welche sich von einem Boden 33 aus konvex wölben.

Die Figur 3b zeigt ein Schneidelement 1, bei welchem ein Fußbereich II Seitenflächen 34, 35 aufweist, welche im Schnitt betrachtet von einem Boden 33 aus S-förmig in Unterseiten 21, 22 übergehen.

Die Figur 3c zeigt ein Schneidelement 1, bei welchem in einem Fußbereich II von einem Boden 33 Seitenflächen 34, 35 ausgehen, die rechtwinklig in Unterseiten 21, 22 übergehen.

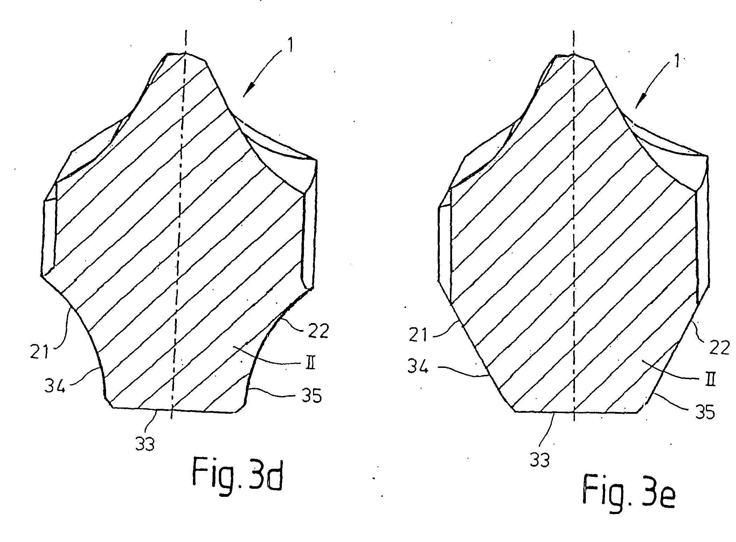

Die Figur 3d zeigt ein Schneidelement 1, bei welchem ein Fußbereich II Seitenflächen 34, 35 bzw. Unterseiten 21, 22 aufweist, welche sich von einem Boden 33 aus konkav wölben.

Die Figur 3e zeigt ein Schneidelement 1, bei welchem ein Fußbereich II einen Boden 33 aufweist, welcher im Schnitt betrachtet in schräg verlaufende Seitenflächen 34, 35 bzw. Unterseiten 21, 22 übergeht.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Die Erfindung sieht auch Bohrwerkzeuge vor, welche mehr als zwei Schneiden aufweisen. Bei diesen weist die Bohrerwendel dann beispielsweise Y-förmige oder X-förmige Nuten auf, wobei der Fußbereich des Schneidelements dann ebenfalls X-förmig oder Y-förmig ausgebildet ist und mit seinen freien Enden aus der Nut über die Bohrerwendel hinaussteht. Somit ist dann bei drei oder mehr Führungsfasen eine Verlängerung der Führungsfase bis in den Fußbereich möglich. Bei derartigen Bohrwerkzeugen überdeckt der Kopfbereich die Schultern, welche die Nuten bilden, zumindest teilweise und stützt sich auf diesen ab.

### Bezugszeichenliste:

- 1: Schneidelement
- 2: Bohrerwendel
- 3: Bohrwerkzeug
- 4: Bohrerkopf
- 5, 6: Querseite von 1
- 7, 8: erste bzw. zweite Schneide von 1
- 9, 10: Hauptschneidkante
- 11, 12: Spanfläche
- 13, 14: Freifläche
- 15, 16: Führungsfase
- 17, 18: Führungskante
- 19: Bohrerlängsachse
- 20: Längsmittelebene
- 21, 22: Unterseite von I
- 23: Querebene zwischen I und II
- 24, 25: Schulter von 26 bzw. 27
- 26, 27: Steg an 2
- 28: Schlitz, Nut
- 29: stirnseitiges Ende von 2
- 30: Boden von 28
- 31, 32: Seitenwand von 28
- 33: Boden von 1
- 34, 35: Seitenfläche von II
- 36, 37: stirnseitiges Ende von II
- 38, 39: Längsseiten von 1
- 40: Aussparung an 39

- B₁, B₂: Breite von 28
- DN: Nenndurchmesser von 1
- DW: Wendeldurchmesser
- H1: Höhe von 15 bzw. 16 im Bereich I
- H2: Höhe von 15 bzw. 16 im Bereich II
- H3: Höhe von 15 bzw. 16 im Bereich I und II
- H4: Kopfhöhe
- Q: Quader
- T: T-ähnliche Gestalt
- Z: Zylinder
- w: Wirkrichtung von 3
- α: Winkel zwischen 31 bzw. 32 und 19
- λ: Winkel zwischen 38 bzw. 39 und 31 bzw. 32

## Patentansprüche

1. Bohrwerkzeug (3) mit einem als Vollhartmetallkopf ausgebildeten Schneidelement(1) als Bohrerkopf (4), einer sich an den Bohrerkopf (4) anschließenden Bohrerwendel (2) und einem nachfolgenden Einspannschaft, wobei der Bohrerkopf (4) mit einem Fußbereich (II) in einem Rücksprung (28) der Bohrerwendel (2) gehalten ist, wobei der Bohrerkopf (4) mit einer Unterseite (21, 22) eines Kopfbereichs (I) auf einem stirnseitigen Ende (29) der Bohrerwendel (2) aufliegt und wobei der Bohrerkopf (4) am Kopfbereich (I) wenigstens zwei Führungsfasen (15, 16) aufweist, **dadurch gekennzeichnet, dass** der Rücksprung (28) in der Bohrerwendel (2) als Schlitz (28) ausgebildet ist, welcher die Bohrerwendel (2) seitlich öffnet, dass das Schneidelement (1) quer zum Verlauf einer Längsmittelebene (20) durchgehend T-förmige Querschnitte aufweist und mit seinem Fußbereich (II) seitlich aus der Bohrerwendel (2) herausragt und dass sich die Führungsfasen (15, 16) des Schneidelements (1) jeweils etwa parallel zu einer Bohrerlängsachse (19) durchgehend über den Kopfbereich (I) und den Fußbereich (II) des Schneidelements(1) erstrecken.

2. Bohrwerkzeug nach Anspruch 1, **dadurch gekennzeichnet, dass** die Führungsfase (15, 16) eine Führungskante (17, 18) aufweist, welche sich insbesondere durchgehend über die gesamte Höhe (H₃) der Führungsfase (15, 16) erstreckt.

3. Bohrwerkzeug nach einem der vorhergehenden Ansprüche, **dadurch gekennzeichnet, dass** sich die Breite (B₁; B₂) des Schlitzes (28) in Wirkrichtung (w) des Bohrwerkzeugs (3) vergrößert und die Seitenwände (31, 32) zur Bohrerlängsachse (19) einen Winkel (α) von 2° bis 45° und insbesondere α = 15° aufweisen.

4. Bohrwerkzeug nach einem der vorhergehenden Ansprüche, **dadurch gekennzeichnet, dass** der Fußbereich (II) in einem Winkel (λ) schräg zu dem stirnseitigen Ende (29) der Bohrerwendel (2) steht, wobei für den Winkel λ gilt 3° ≤ λ ≤ 15° und insbesondere λ ≈ 6°.

5. Bohrwerkzeug nach einem der vorhergehenden Ansprüche, **dadurch gekennzeichnet, dass** die Seitenflächen (34, 35) symmetrisch zu der Längsmittelebene (20) angeordnet sind.

6. Bohrwerkzeug nach einem der vorhergehenden Ansprüche, **dadurch gekennzeichnet, dass** die Seitenflächen (34, 35) konkav oder konvex oder s-förmig ausgebildet sind.

7. Bohrwerkzeug nach einem der vorhergehenden Ansprüche, **dadurch gekennzeichnet, dass** wenigstens eine der Längsseiten (38, 39) des Bohrerkopfs (4) wenigstens eine etwa parallel zur Bohrerlängsachse verlaufende Aussparung (40) aufweist.

## Claims

1. Drilling tool (3) having a cutting element (1), designed as solid carbide head, as drill head (4), a drill helix (2) adjoining the drill head (4), and a following clamping shank, the drill head (4) being held with a foot region (II) in a set-back portion (28) of the drill helix (2), the drill head (4) resting with an underside (21, 22) of a head region (I) on a front end (29) of the drill helix (2), and the drill head (4) having at the head region (I) at least two guide bevels (15, 16), **characterized in that** the set-back portion (28) in the drill helix (2) is designed as a slot (28) which laterally opens the drill helix (2), **in that** the cutting element (1) has continuously T-shaped cross sections transversely to the course of a longitudinal centre plane (20) and projects with its foot region (II) laterally from the drill helix (2), and **in that** the guide bevels (15, 16) of the cutting element (1) each extend approximately parallel to a drill longitudinal axis (19) continuously over the head region (I) and the foot region (II) of the cutting element (1).

2. Drilling tool according to Claim 1, **characterized in that** the guide bevel (15, 16) has a guide edge (17, 18) which in particular extends continuously over the entire height (H₃) of the guide bevel (15, 16).

3. Drilling tool according to one of the preceding claims, **characterized in that** the width (B₁; B₂) of the slot (28) increases in the effective direction (w) of the drilling tool (3) and the side walls (31, 32) are at an angle (α) of 2° to 45° and in particular α = 15° to the drill longitudinal axis (19).

4. Drilling tool according to one of the preceding claims, **characterized in that** the foot region (II) is disposed obliquely to the front end (29) of the drill helix (2) at an angle (λ), where, for the angle λ, 3° ≤ λ ≤ 15°, and in particular λ ≈ 6°.

5. Drilling tool according to one of the preceding claims, **characterized in that** the side surfaces (34, 35) are arranged symmetrically to the longitudinal centre plane (20).

6. Drilling tool according to one of the preceding claims, **characterized in that** the side surfaces (34, 35) are of concave or convex or S-shaped design.

7. Drilling tool according to one of the preceding claims, **characterized in that** at least one of the longitudinal sides (38, 39) of the drill head (4) has at least one recess (40) running approximately parallel to the drill longitudinal axis.

## Revendications

1. Foret (3) comportant un élément de coupe (2) comme tête de foret (4), constituant une tête pleine en métal traité, une spire de foret (2) faisant suite à la tête de foret (4) et une queue de serrage,
la tête de foret (4) étant tenue par la région de pied (II) dans une partie en retrait (28) de la spire (2),
la tête de foret (4) s'appliquant par le côté inférieur (21, 22) d'une région de tête (I) sur l'extrémité côté frontal (29) de la spire (2) et
la tête de foret (4) ayant, au niveau de la région de tête (I), au moins deux chanfreins de guidage (15, 16),
**caractérisé en ce que**
le retrait (28) dans la spire de foret (2) est réalisé en forme de fente (28) qui ouvre latéralement la spire de foret (2),
l'élément de coupe (1) ayant des sections en forme de T, continues, transversalement au tracé d'un plan médian longitudinal (20) et par sa région de pied, l'élément de coupe dépasse latéralement de la spire (2) et
les congés de guidage (15, 16) de l'élément de coupe (1) s'étendant chaque fois sensiblement parallèlement à l'axe longitudinal (19) du foret, de façon continue par la région de tête (I) et la région de pied (II) de l'élément de coupe (I).

2. Foret selon la revendication 1,
**caractérisé en ce que**
le congé de guidage (15, 16) comporte une arête de guidage (17, 18) qui s'étend notamment de façon continue sur toute la hauteur (H₃) du congé de guidage (15, 16).

3. Foret selon l'une des revendications précédentes,
**caractérisé en ce que**
la largeur (B₁, B₂) de la fente (28) s'agrandit dans la direction d'action du foret (3) et les parois latérales (31, 32) font par rapport à l'axe longitudinal (19) du foret, un angle (α) compris entre 2° et 45°, notamment tel que α = 15°.

4. Foret selon l'une des revendications précédentes,
**caractérisé en ce que**
la région de pied (II) fait un angle (λ) en biais par rapport à l'extrémité côté frontal (29) de la spire (2), l'angle (λ) étant tel que 3° ≤ λ ≤ 15° et notamment λ ~ 6°.

5. Foret selon l'une des revendications précédentes,
**caractérisé en ce que**
les surfaces latérales (34, 35) sont symétriques par rapport au plan médian longitudinal (20).

6. Foret selon l'une des revendications précédentes,
**caractérisé en ce que**
les surfaces latérales (34, 35) sont concaves ou convexes ou en forme de S.

7. Foret selon l'une des revendications précédentes,
**caractérisé en ce qu'**
au moins l'un des grands côtés (38, 39) de la tête de foret (4) a une cavité (40) qui est au moins sensiblement parallèle à l'axe longitudinal du foret.
